# EUROPÄISCHE PATENTANMELDUNG

(11) **EP 1 045 190 A2**
(43) Veröffentlichungstag der Anmeldung: **18.10.2000**
(21) Anmeldenummer: 00107547.2
(22) Anmeldetag: 07.04.2000
(51) Int. Cl.: F16L 59/02, C04B 35/111

(54) **Mikroporöser Wärmedämmformkörper**

(30) Priorität: 14.04.1999 DE 19916670
(71) Anmelder: Diehl AKO Stiftung & Co. KG, 88239 Wangen (DE)
(72) Erfinder: Gierer, Berndt, 88131 Bodolz (DE)
(74) Vertreter: Hofmann, Gerhard, Dipl.-Ing. Patentassessor

(57) **Zusammenfassung**

Ein mikroporöser Wärmedämmformkörper für Strahlungsbeheizungen von Kochfeldern besitzt Kanalporen zur Belüftung bzw. Entgasung bei Temperatureinwirkung. Der mikroporöse Wärmedämmformkörper besteht aus einem Wärmedämmaterial, dem zusätzlich zu feinteiligen Metalloxiden, Trübungsmitteln, Fasermaterialien und anorganischen Bindemitteln ein expandiertes Graphit in einer Menge von bis zu 15 Gew.%, vorzugsweise 3 bis 5 Gew.% zugegeben wird.

## Beschreibung

Die Erfindung betrifft einen mikroporösen Wärmedämmformkörper für Strahlungsbeheizungen von Kochfeldern.

Ein mikroporöser Wärmedämmformkörper aus einem verpreßten Wärmedämmaterial mit 30 bis 100 Gew.% feinteiliges Metalloxid, 0 bis 50 Gew.% Trübungsmittel, 0 bis 50 Gew.% Fasermaterial und 0 bis 15 % anorganisches Bindemittel ist durch die EP 0 618 399 B1 offenbart. Ein solcher mikroporöser Wärmedämmformkörper ist ferner in der US-A-4,985,163 beschrieben.

Entsprechend der Beschreibung der EP 0 618 399 B1 nehmen die aus diesem Wärmedämmaterial hergestellten Wärmedämmformkörper während der Lagerung und auch während des Gebrauchs Feuchtigkeit in relativ großen Mengen auf. Wenn in einem praktischen Einsatz ein solcher Wärmedämmformkörper in sehr kurzer Zeit mit einer hohen Temperatur beaufschlagt wird, so entsteht explosionsartig Wasserdampf, der die Struktur des Wärmedämmformkörpers zerstört. Diese Zerstörungen bestehen insbesondere in einem Aufplatzen der Oberflächen des Wärmedämmformkörpers. Um diese Mängel zu beheben, ist in der EP 0 618 399 B1 vorgeschlagen worden, bei einem verpreßtem Wärmedämmaterial mit den geschilderten Komponenten und einer Dichte von 250 bis 350 g/l zumindest in eine Oberfläche des Wärmedämmformkörpers Kanalporen einzubringen. Solche Kanalporen können beliebige geometrische Grundflächen aufweisen und sind unterschiedlich tief in den Wärmedämmformkörper eingebracht. Bei diesem bekannten Wärmedämmformkörper mit Kanalporen wurde sowohl bei direkter als auch bei indirekter Aufheizung ein Aufplatzen der Oberflächen bei Temperaturbelastung nicht mehr beobachtet.

Ausgehend von dem vorgenannten Stand der Technik ist es Aufgabe der Erfindung, einen mikroporösen Wärmedämmformkörper zu schaffen, dessen mechanische Eigenschaften weiterhin verbessert sind.

Erfindungsgemäß wird diese Aufgabe durch die Merkmale des Patentanspruches 1 gelöst. Vorteilhafte Weiterbildungen und Ausgestaltungen der Erfindung sind in den Unteransprüchen beschrieben.

Die Beigabe von expandiertem Graphit zu den übrigen und an sich bekannten Mischungskomponenten des verpreßten Wärmedämmformkörpers hat den Vorteil, daß das expandierte Graphit unter Temperatureinwirkung feste Bindungen mit freien Elementen eingeht. Da solche freien Elemente größtenteils negative Eigenschaften auf die Oxidausbildung des Heizleiters ausüben, ist diese Bindungsfreudigkeit des Graphits in dem mikroporösen Wärmedämmformkörper von großem technischen Vorteil. Darüber hinaus entsteht durch das Bindungsverhalten des Graphits in dem Wärmedämmformkörper ein Sintervorgang, der den Wärmedämmformkörper insgesamt mechanisch stabiler macht. Dies wirkt sich vorteilhaft bei der Handhabung und auf dem Transportweg der mikroporösen Wärmedämmformkörper aus.

In Versuchen hat sich herausgestellt, daß ein Volumenanteil des expandierten Graphits bis etwa 15 Gew.%, vorzugsweise von etwa 3 bis 5 Gew.% ausreichend ist und eine Verbesserung der mechanischen Eigenschaften, vor allem der Festigkeit, bewirkt, während gleichzeitig die elektrische Leitfähigkeit des Graphits ohne Nachteile auf den mikroporösen Wärmedämmformkörper und seine Isolationseigenschaften bleibt. Die Dichte des Wärmedämmformkörpers kann durch die Graphitbeigabe, abhängig vom Expansionsgrad des Graphits, variiert werden.

Als weiterer Vorteil der Graphitbeigabe hat sich gezeigt, daß Heizteiter, die über einem graphitierten Wärmedämmformkörper liegen, eine dunkle Oxidschicht ausbilden. Dadurch wird die thermische Abstrahleigenschaft des Heizleiters verbessert und damit seine Betriebstemperatur herabgesetzt, mit der Folge, daß die Lebensdauer des Heizleiters deutlich erhöht wird.

Von weiterem Vorteil hat sich in Versuchen herausgestellt, daß eine thermische Nachbehandlung des Wärmedämmformkörpers nach dem Preßvorgang möglich und vorteilhaft für die gesamten Eigenschaften ist.

## Patentansprüche

1. Mikroporöser Wärmedämmformkörper für Strahlungsbeheizungen von Kochfeldern, bei dem zumindest eine Oberfläche zumindest eine Kanalpore mit einer Grundfläche der Pore von 0,01 bis 10 mm² und mit einer auf die jeweilige Dicke des Wärmedämmformkörpers bezogenen Eindringtiefe von 5 bis 100 % aufweist,
dadurch gekennzeichnet,
daß der Wärmedämmformkörper aus einem verpreßten Wärmedämmaterial besteht, welches 30 bis 100 Gew.% feinteiliges Metalloxid, 0 bis 50 Gew.% Trübungsmittel, 0 bis 50 Gew.% Fasermaterial, 0 bis 15 Gew.% Graphit und 0 bis 15 Gew.% anorganisches Bindemittel enthält.

2. Mikroporöser Wärmedämmformkörper nach Anspruch 1,
dadurch gekennzeichnet,
daß der Graphit-Anteil zwischen 3 und 5 Gew.% liegt.

3. Mikroporöser Wärmedämmformkörper nach Anspruch 1 oder 2,
dadurch gekennzeichnet,
daß als Graphit für das verpreßte Wärmedämmaterial ein expandiertes Graphit eingesetzt wird.

4. Mikroporöser Wärmedämmformkörper nach einem der Ansprüche 1 bis 3,
dadurch gekennzeichnet,
daß die Dichte des verpreßten Wärmedämmaterials 0,35 bis 1,0 g/cm³, vorzugsweise etwa 0,4 g/cm³, beträgt.
